## Europäisches Patentamt
## European Patent Office
## Office européen des brevets

(19)

(11) Veröffentlichungsnummer: **0 256 295**
**A2**

(12) **EUROPÄISCHE PATENTANMELDUNG**

(21) Anmeldenummer: **87109915.6**

(22) Anmeldetag: **09.07.87**

(51) Int. Cl.4: **H04N 7/08**

(30) Priorität: **16.07.86 DE 3623925**

(43) Veröffentlichungstag der Anmeldung:
**24.02.88 Patentblatt 88/08**

(84) Benannte Vertragsstaaten:
**AT CH DE FR GB IT LI**

(71) Anmelder: **GRUNDIG E.M.V.**
**Elektro-Mechanische Versuchsanstalt Max**
**Grundig holländ. Stiftung & Co. KG.**
**Kurgartenstrasse 37**
**D-8510 Fürth(DE)**

(72) Erfinder: **Heider, Peter, Dipl.-Ing. c/o**
**GRUNDIG E.M.V.**
**Max Grundig holländ. Stiftung & Co. KG**
**Kurgartenstrasse 37 D-8510 Fürth/Bay(DE)**

(54) **Videotextdecoder mit fernsehprogrammspezifischer Videotextabspeicherung.**

(57) Bei einem Videotextdecoder mit einem Speicher zur Abspeicherung des Inhaltes von n Videotextseiten, einer Einrichtung zur Eingabe von Befehlen und einem Mikrocomputer, der die Auswertung der eingegebenen Befehle und die Speichersteuerung vornimmt, wird jedem einzelnen Fernsehprogramm eine oder mehrere Seitennummern der von der zugehörigen Programmquelle gesendeten Videotextseiten fest zugeordnet, so daß beim Einschalten des Fernsehempfängers und beim Programmwechsel automatisch die dem momentan empfangenen Fernsehprogramm zugeordneten Videotextseiten im Speicher abgelegt werden.

EP 0 256 295 A2

## VIDEOTEXTDECODER MIT FERNSEHPROGRAMMSPEZIFISCHER VIDEOTEXTABSPEICHERUNG

Die vorliegende Erfindung betrifft einen Videotextdecoder mit einem Speicher zur Abspeicherung des Inhaltes von n Videotextseiten, einer Einrichtung zur Eingabe von Befehlen und einem Mikrocomputer, der die Auswertung der eingegebenen Befehle und die Speichersteuerung vornimmt.

Ein solcher Videotextdecoder ist beispielsweise aus der Zeitschrift "Valvo, TI 840314, Videotext-Decoder der 2. Generation - das Valvo Konzept mit den Schaltungen SAA 5230 und SAA 5240" bekannt. Die Aufgaben eines solchen Videotextdecoders bestehen wesentlichen darin, aus dem ihm zugeführten FBAS-Signal die Videotextinformation abzutrennen, in einem Speicher (RAM) abzulegen und Synchronsignale zur Darstellung der Videotextinformation (evtl. gemeinsam mit der Bildinformation) auf dem Bildschirm eines Fernsehempfängers zu erzeugen. Die Auswahl der gewünschten Videotextinformation aus einer Vielzahl vom Sender angebotener, durchnumerierter Videotextseiten erfolgt beispielsweise mittels einer Fernbedienung. Die mittels der Fernbedienung eingegebenen Befehle werden vom Mikrocomputer decodiert. Der Mikrocomputer steuert ferner den Speicher, in dem der Inhalt der gewünschten Videotextseite(n) abgespeichert wird. Die im Speicher abgelegte Videotextinformation wird einem Zeichengenerator zugeführt und dort in zur Darstellung auf dem Bildschirm geeignete R, G, B-Signale umgewandelt. Die Wartezeit auf die (nächste) gewünschte Videotextseite ist bei dem bekannten Videotextdecoder gering, da er mehrere Videotextseiten gleichzeitig suchen und abspeichern kann. Folglich sind - während der Benutzer die erste abgespeicherte Seite liest - weitere Seiten bereits abgespeichert. Diese Seiten können unter Verwendung der Fernbedienung verzögerungsfrei auf dem Bildschirm dargestellt werden.

Die Anzahl der Videotextinformation ausstrahlenden Fernsehsender ist bis heute vergleichsweise gering. In absehbarer Zukunft werden jedoch immer mehr Sender bzw. Programmquellen den Zuschauern Videotextsendungen liefern. Auch die Anzahl der pro Programmquelle angebotenen Videotextseiten wird mehr und mehr steigen. Unterstützt wird dieser Effekt auch noch durch die Möglichkeit des länderübergreifenden Empfangs von Fernsehsendungen, beispielsweise über Satelliten. Die Art von Informationen, die von den einzelnen Sendern bzw. Programmquellen unter den einzelnen Seitennummern angeboten wird, ist von Programmquelle zu Programmquelle unterschiedlich.

Der vorliegenden Erfindung liegt die Aufgabe zugrunde, einen Videotextdecoder der im Oberbegriff des Anspruchs 1 angegebenen Art derart weiterzubilden, daß auch bei einer Vielzahl von Videotextinformation anbietenden Programmquellen eine verzögerungsfreie Anwahl dieser Seiten möglich ist und stets die vom Benutzer gewünschten, programmquellenspezifischen Videotextseiten abgespeichert sind.

Diese Aufgabe wird durch die im kennzeichnenden Teil des Patentanspruchs angegebenen Merkmale gelöst.

Die Vorteile der Erfindung bestehen im wesentlichen darin, daß der Benutzer durch (veränderbare) Vorprogrammierung festlegen kann, welche Videotextseiten er bei welcher Programmquelle bevorzugt sehen will. Beim späteren Einschalten des Fernsehgeräts oder bei einem Programmwechsel sucht der Videotextdecoder automatisch heraus, welche Videotextseiten der momentanen Programmquelle der Benutzer bevorzugt sehen will und legt den Inhalt dieser Seiten automatisch im Speicher ab. Anschließend kann durch Betätigung einer Taste auf der Fernbedienung jede der gewünschten Seiten verzögerungsfrei auf dem Bildschirm des Fernsehempfängers dargestellt werden. Weitere vorteilhafte Eigenschaften des beanspruchten Videotextdecoders ergeben sich aus einem Ausführungsbeispiel, welches im folgenden anhand der Tabellen 1 und 2 näher erläutert wird.

Die Tabelle 1 zeigt das Videotextangebot eines Fernsehsenders A, welches aus den Videotextseiten 100, 110, 120, 130, 140, 150, 160 und 170 besteht. Diese Videotextseiten enthalten aktuelle Nachrichten (Seite 100), Ergebnisse der Fußball-Bundesliga (Seite 110), Tabelle der Fußball-Bundesliga (Seite 120), nächster Spieltag der Fußball-Bundesliga (Seite 130), Pollenflugvorhersage (Seite 140), Wetterbericht (Seite 150), Aktienkurse (Seite 160) und Währungskurse (Seite 170).

Die Tabelle 2 zeigt das Videotextangebot eines Fernsehsenders B, welches aus den Videotextseiten 100, 200, 300, 310 und 400 besteht. Diese Videotextseiten enthalten das Bergsteigerwetter - (Seite 100), aktuelle Nachrichten (Seite 200), Ergebnisse der österr. Fußball-Bundesliga (Seite 300), Tabelle der österr. Fußball-Bundesliga (Seite 310) und die Pollenflugvorhersage (Seite 400).

Derartige Tabellen kann der Benutzer beispielsweise den ebenfalls im Rahmen des Videotextangebotes gesendeten oder druckschriftlich verbreiteten Videotextübersichtstafeln entnehmen.

Den Benutzer interessieren beispielsweise vom Videotextangebot des Senders A insbesondere die Seiten 100, 140, 110, 120 und 130 sowie vom Angebot des Senders B insbesondere die Seiten 300 und 310, und zwar jeweils in der angegebenen Reihen folge.

Die Zuordnung der gewünschten Seitennummern zu den jeweiligen Sendern bzw. Programmquellen kann wie folgt geschehen. Der Benutzer - schaltet mittels der Fernbedienung des Fernsehempfängers auf das gewünschte Programm um (beispielsweise entspricht die Programmquelle A der Taste "1" auf der Fernbedienung). Anschließend wechselt er - ebenfalls mittels einer auf der Fernbedienung vorgesehenen Taste - vom "Fernsehbetrieb" in den "Videotextbetrieb". Dann programmiert er mittels der Fernbedienung die genannten Seitennummern (100, 140, 110, 120 und 130) ein. Diese werden jeweils durch Betätigung einer "Memory"-Taste bestätigt bzw. abgespeichert. Das hat zur Folge, daß der Videotextdecoder bei jeder späteren Umschaltung auf die Programmquelle A (mittels der Taste 1) bzw. bei der Einschaltung der Programmquelle A (beispielsweise aus dem Bereitschaftsbetrieb des Gerätes) automatisch die Seitennummern 100, 140, 110, 120 und 130 heraussucht und den Inhalt dieser Seiten im Speicher ablegt, so daß diese Seiten bei Bedarf verzögerungsfrei auf dem Bildschirm des Fernsehempfängers dargestellt werden können.

Die Zuordnung der Seitennummern 300 und 310 zum Sender B bzw. zur Programmquelle B erfolgt ebenso, wie es im Zusammenhang mit dem Sender A bzw. der Programmquelle A erläutert wurde. Der Benutzer schaltet mittels der Fernbedienung den Fernsehempfänger auf das gewünschte Programm um. Anschließend wechselt er vom "Fernsehbetrieb" in den "Videotextbetrieb". Dort programmiert er mittels der Fernbedienung die Seitennummern 300 und 310 ein und bestätigt diese.

Auf diese Art und Weise ist es möglich, jedem Fernsehprogramm eine gewünschte Anzahl n (beim eingangs genannten Videotextdecoder ist n höchstens gleich 8) von Seitennummern fest zuzuordnen. Der Inhalt dieser Seiten wird automatisch im Speicher des Videotextdecoders abgelegt, sobald mittels der Fernbedienung das zugehörige Programm eingeschaltet wurde, und kann damit verzögerungsfrei auf dem Display dargestellt werden.

Die Zuordnung der Seitennummern zu den einzelnen Programmquellen kann auch auf andere Art und Weise erfolgen. Beispielsweise kann eine Übersichtsseite (siehe gleichzeitig eingereichte Patentanmeldung "Mikrocomputergesteuerter Videotextdecoder")auf dem Bildschirm des Fernsehempfängers dargestellt werden, die einzelne Seiten blockweise eingegeben und der gesamte Block einem bestimmten Programm zugeordnet werden. Zur Erhöhung der Übersichtlichkeit können auf der Übersichtsseite und/oder im Textbetrieb (im Textbetrieb wird in der Kopfzeile einer Videotextseite die jeweilige Blocknummer angezeigt) zugeordnete Blöcke andersfarbig markiert werden als nicht zugeordnete Blöcke.

TABELLE 1

Fernsehsender: A

Videotextangebot:

  Seite 100 Aktuelle Nachrichten
Seite 110 Ergebnisse der Fußball-Bundesliga
Seite 120 Tabelle der Fußball-Bundesliga
Seite 130 Nächster Spieltag der Fußball-Bundesliga
Seite 140 Pollenflugvorhersage
Seite 150 Wetterbericht
Seite 160 Aktienkurse
Seite 170 Währungskurse

TABELLE 2

Fernsehsender: B

Videotextangebot:

  Seite 100 Aktuelle Nachrichten
Seite 200 Bergsteigerwetter
Seite 300 Ergebnisse der österr. Fußball-Bundesliga
Seite 310 Tabelle der österr. Fußball-Bundesliga
Seite 400 Pollenflugvorhersage

**Ansprüche**

  Videotextdecoder mit
- einem Speicher zur Abspeicherung des Inhaltes von n Videotextseiten,
- einer Einrichtung zur Eingabe von Befehlen,
- und einem Mikrocomputer, der die Auswertung der eingegebenen Befehle und die Speichersteuerung vornimmt,
**dadurch gekennzeichnet,**
- daß mittels der Einrichtung zur Eingabe von Befehlen einzelnen Fernsehprogrammen eine oder mehrere Seitennummern der von der jeweiligen Programmquelle gesendeten Videotextseiten zugeordnet werden, und
- daß beim Einschalten des Fernsehempfängers und beim Programmwechsel automatisch die dem momentan empfangenen Fernsehprogramm zugeordneten Videotextseiten im Speicher abgelegt werden.